(19) Europäisches Patentamt
European Patent Office
Office européen des brevets

(11) **EP 1 797 394 B1**

(12) **EUROPÄISCHE PATENTSCHRIFT**

(45) Veröffentlichungstag und Bekanntmachung des Hinweises auf die Patenterteilung:
**08.04.2009 Patentblatt 2009/15**

(21) Anmeldenummer: **05792061.3**

(22) Anmeldetag: **29.09.2005**

(51) Int Cl.:
***G01B 7/14*** *(2006.01)*

(86) Internationale Anmeldenummer:
**PCT/EP2005/054927**

(87) Internationale Veröffentlichungsnummer:
**WO 2006/040267 (20.04.2006 Gazette 2006/16)**

(54) **VERFAHREN UND ANORDNUNG ZUM BESTIMMEN DES ABSTANDES ZWISCHEN EINER PROFILIERTEN OBERFLÄCHE VON EINER SICH RELATIV DAZU BEWEGENDEN FUNKTIONSFLÄCHE MITTELS ZWEIER MESSSPULEN**

METHOD AND SYSTEM FOR DETERMINING THE DISTANCE BETWEEN A PROFILED SURFACE FROM A FUNCTIONAL SURFACE MOVING IN RELATION THERETO BY USING TWO MEASURING COILS

PROCEDE ET DISPOSITIF DE DETERMINATION DE L'ECART ENTRE UNE SURFACE PROFILEE ET UNE SURFACE FONCTIONNELLE MOBILE PAR RAPPORT A CELLE-CI AU MOYEN DE DEUX BOBINES DE MESURE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **08.10.2004 DE 102004049753**

(43) Veröffentlichungstag der Anmeldung:
**20.06.2007 Patentblatt 2007/25**

(73) Patentinhaber:
• **SIEMENS AKTIENGESELLSCHAFT**
  **80333 München (DE)**
• **Micro-Epsilon Messtechnik GmbH & Co. KG**
  **94496 Ortenburg (DE)**

(72) Erfinder:
• **SCHMID, Robert**
  **91077 Neunkirchen (DE)**
• **WEIS, Benno**
  **91334 Hemhofen (DE)**
• **GRÖMMER, Werner**
  **94496 Ortenburg / Kaltenöd (DE)**
• **MEDNIKOV, Felix**
  **94496 Ortenburg (DE)**
• **SELLEN, Martin**
  **94496 Ortenburg (DE)**

(56) Entgegenhaltungen:
EP-A- 0 264 461          DE-A1- 2 503 560
DE-A1- 19 525 131

EP 1 797 394 B1

## Beschreibung

Die Erfindung betrifft ein Verfahren zum Bestimmen des Abstandes einer in Richtung der Abstandsbestimmung profilierten, leitfähigen Oberfläche von einer sich relativ zu der Oberfläche bewegenden Funktionsfläche mit einer Messanordnung, bei der ein Sensor mit einer ersten und einer zweiten Messspule zum Erzeugen jeweils eines elektromagnetischen Wechselfeldes eingangsseitig mit einer Oszillator-Anordnung und ausgangsseitig mit seinen eine dem Abstand zwischen der ersten und der zweiten Messspule jeweils einerseits und der Oberfläche andererseits entsprechende erste und zweite Messgröße bereitstellenden Ausgängen über eine Demodulator-Einrichtung mit einer Analog-Digital-Wandlereinrichtung zur Gewinnung von den ersten und zweiten Messgrößen entsprechenden ersten und zweiten digitalen Messwerten verbunden sind, bei der an die Analog-Wandler-Einrichtung ein Rechenbaustein angeschlossen ist, ein Sensor eingesetzt wird, dessen zweite Messspule auf der von der profilierten Oberfläche abgewandten Seite der ersten Messspule in einem festen, bekannten Abstand von der ersten Messspule angeordnet ist und der Rechenbaustein ein den Abstand der Funktionsfläche von der Oberfläche angebender Abstandsmesswert aus dem ersten und dem zweiten digitalen Messwert unter Berücksichtigung eines Referenz-Digitalwertes und des festen Abstands errechnet.

Ein Verfahren dieser Art ist aus der deutschen Patentschrift DE 195 25 131 C2 und der dazugehörigen Offenlegungsschrift DE 195 25 131 A bekannt. Bei diesem bekannten Verfahren wird ein Sensor mit zwei Messspulen verwendet, die senkrecht zur leitfähigen Oberfläche unmittelbar hintereinander angeordnet und zusätzlich zueinander versetzt sind. Die beiden Messspulen werden bei dem bekannten Verfahren eingangsseitig mit Frequenzen von jeweils einem Oszillator beaufschlagt, wobei sich die Oszillatorfrequenzen voneinander unterscheiden. In Abhängigkeit vom jeweiligen Abstand des Sensors von der leitfähigen Oberfläche ergibt sich eine Impedanzänderung in den Messspulen, die mittels ausgangsseitig an den Messspulen angeschlossenen Differenzverstärkern erfasst wird. Mittels einer den Differenzverstärkern nachgeschalteten Demodulator-Einrichtung mit zwei Demodulatoren und einen dieser nachgeordneten Schaltung mit zwei EPROMS werden digitale Messwerte erzeugt, die dem Abstand der jeweiligen Spule des Sensors von der leitfähigen Oberfläche entsprechen. Die digitalen Messwerte werden einem Rechenbaustein in Form eines Vergleichers zugeführt und dort daraufhin untersucht, ob unter Einräumung eines gewissen Toleranzbereiches die digitalen Messwerte beider Messspulen übereinstimmen. Ist dies der Fall, dann gilt der jeweils erfasste Abstand als korrekt ermittelt, und es wird ein OK-Signal vom Rechenbaustein erzeugt.

Die europäische Patentanmeldung 0 264 461 A offenbart ein Verfahren und eine Vorrichtung zur Bestimmung des Abstandes einer leitfähigen Oberfläche zu einer Funktionsfläche mit einer Messanordnung, welche eine Messspule und eine Referenzspule aufweist, wobei ein Differenzstrom beider Spulen zur Messung des Abstandes dient.

Die deutsche Offenlegungsschrift DE 25 03 560 offenbart eine Abstandsmesseinrichtung mit einem eine Referenzspule und eine Messspule umfassenden Sensor, wobei die Spulen von einem gemeinsamen Oszillator mit einer Oszillatorfrequenz beaufschlagt sind und der Oszillatorausgang abwechselnd mit der Referenzspule und der Messspule verbunden wird. Hierbei dient die Messspule zur Bestimmung des zu ermittelnden Abstandes. Die Referenzspule dient der Kompensation eines den Abstandswert verfälschenden Temperatureffekts.

Der Erfindung liegt die Aufgabe zugrunde, ein Verfahren zum Bestimmen des Abstandes einer in Richtung der Abstandsbestimmung profilierten, leitfähigen Oberfläche von einer sich relativ dazu bewegenden Funktionsfläche derart auszugestalten, dass der mit diesem Verfahren bestimmte Abstand weitestgehend unabhängig vom Profil der leitenden Oberfläche ist. Handelt es sich bei der profilierten, leitfähigen Oberfläche um die Oberfläche des Langstators eines Magnetschwebebahnsystems, dann sollen mit dem bekannten Verfahren Abstandsmessungen ermöglicht sein, die den sogenannten Nut-Zahn-Ripple, d. h. die Impedanzänderungen der Messspulen beim Überfahren der Zähne und Nuten, reduzieren.

Zur Lösung dieser Aufgabe entspricht bei einem Verfahren der eingangs angegebenen Art erfindungsgemäß der Referenz-Digitalwert dem Messwert einer sich außerhalb des Einflussbereichs der Oberfläche befindlichen, den Messspulen zugeordneten Referenzspule und im Rechenbaustein wird ein den Abstand der Funktionsfläche von der Oberfläche angebender Abstandsmesswert nach der Beziehung

$$d = f\left(\frac{N1 - N3}{N2 - N1} . a\right)$$

oder nach der Beziehung

$$d = f\frac{\ln(N1) - \ln(N3)}{\ln(N2) - \ln(N1)} . a ,$$

bestimmt wobei N1 den ersten digitalen Messwert, N2 den zweiten digitalen Messwert, N3 den Referenz-Digitalwert und a den festen Abstand bezeichnet.

Der wesentliche Vorteil des erfindungsgemäßen Verfahrens besteht darin, dass bei ihm der Einfluss des Profils der profilierten, leitfähigen Oberfläche auf das Messergebnis weitgehend eliminiert ist; bei einem Magnetschwebebahnsystem ist das Messergebnisse durch den Nut-Zahn-Ripple nicht nennenswert beeinflusst. Ein weiterer Vorteil besteht darin, dass auch temperaturänderungsbedingte Abstandsmessfehler kompensierbar sind.

Wird bei dem erfindungsgemäßen Verfahren ein Sensor mit linearer Kennlinie verwendet, dann ist es vorteilhaft, wenn im Rechenbaustein ein den Abstand der Funktionsfläche von der Oberfläche angebender Abstandsmesswert nach der Beziehung

$$d = f\left(\frac{N1 - N3}{N2 - N1} . a\right)$$

bestimmt, wobei N1 den ersten digitalen Messwert, N2 den zweiten digitalen Messwert, N3 den Referenz-Digitalwert und a den festen Abstand zwischen den Messspulen bezeichnet. Bevorzugt ist dabei daran gedacht, den Abstand d direkt mit dem Produkt aus dem oben angegebenen Quotienten und dem festen Abstand a zu bestimmen.

Weist dagegen der Sensor bei dem erfindungsgemäßen Verfahren eine nichtlineare Kennlinie auf, dann erfolgt vorteilhafterweise die Bestimmung des Abstandes nach der Beziehung

$$d = \frac{\ln(N1) - \ln(N3)}{\ln(N2) - \ln(N1)} . a \ ,$$

wobei N1 den ersten digitalen Messwert, N2 den zweiten digitalen Messwert, N3 den Referenz-Digitalwert und a den festen Abstand bezeichnet.

Bei dem erfindungsgemäßen Verfahren kann der Referenz-Digitalwert zur Bestimmung des jeweiligen Abstandes in unterschiedlicher Weise bereitgestellt werden. So kann es vorteilhaft sein, wenn der Referenz-Digitalwert mittels einer Referenzspule des Sensors gewonnen wird, die den Messspulen benachbart außerhalb des Einflussbereichs der Oberfläche angeordnet ist.

Als besonders vorteilhaft wird es jedoch angesehen, wenn der Referenz-Digitalwert in einem Speicher des Rechenbausteins gespeichert ist und bei der Bestimmung des Abstandes aus dem Speicher abgerufen wird. In diesem Falle kann nämlich auf eine separate Referenzspule verzichtet werden. Allerdings ist bei dieser Ausführungsform der Referenz-Digitälwert der jeweiligen Temperatur anzupassen.

Um sicherzustellen, dass das mit dem erfindungsgemäßen Verfahren ermittelte Messergebnis des Abstandes zwischen der leitfähigen Oberfläche und der sich bewegenden Funktionsfläche richtig ist, wird aus dem ersten und dem zweiten digitalen Messwert im Rechenbaustein durch Umsetzung jeweils eine erste und eine zweite digitale Abstandsmessgröße gebildet, und es werden die beiden digitalen Abstandsmessgrößen unter Gewinnung einer Vergleichsgröße miteinander verglichen; bei einer dem festen Abstand zwischen den Messspulen entsprechenden Vergleichsgröße wird von dem Rechenbaustein ein Sensor-Sicherheitssignal erzeugt. Dabei wird bei der Erzeugung des Sensor-Sicherheitssignals vorteilhafterweise ein gewisser Toleranzbereich der Vergleichsgröße zugelassen.

Zur weiteren Erhöhung der Messsicherheit bei der Durchführung des erfindungsgemäßen Verfahrens wird mittels einer Umschalteinrichtung in einem Schaltzustand der Eingang der ersten Messspule an eine Referenzspannung angeschlossen und der Eingang der zweiten Messspule mit der Oszillatorfrequenz beaufschlagt; in einem weiteren Schaltzustand der Eingang der zweiten Messspule an die Referenzspannung angeschlossen und der Eingang der ersten Messspule mit der Oszillatorfrequenz beaufschlagt; aus den sich in den verschiedenen Schaltzuständen am Ausgang der Analog-Wandler-Einrichtung ergebenden Signalen wird im Rechenbaustein ein Störsignal ermittelt. Auf diese Weise lassen sich Störungen, die z. B. durch das Betreiben mehrerer nebeneinander liegender Sensorsysteme auftreten könnten, eliminieren.

Das erfindungsgemäße Verfahren lässt sich besonders vorteilhaft einfach durchführen, wenn die beiden Messspulen von der Oszillator-Anordnung mit gleichfrequenten Signalen beaufschlagt werden und die Beaufschlagung mit den gleichfrequenten Signalen abwechselnd derart erfolgt, dass zu einer Zeit nur jeweils eine Messspule beaufschlagt ist. Dadurch ist nicht nur der Aufwand hinsichtlich der Oszillator-Anordnung klein gehalten, sondern es können auch die Messspulen und ggf. von ihnen gebildete Resonanzkreise gleich ausgeführt sein.

Bei dem erfindungsgemäßen Verfahren können unterschiedlich ausgestaltete Oszillator-Anordnungen zur Abgabe der gleichfrequenten Signale eingesetzt werden. So wird es als vorteilhaft angesehen, wenn die Oszillatoranordnung zwei Oszillatoren aufweist, die abwechselnd angesteuert werden.

Ebenfalls vorteilhaft erscheint es, wenn bei einer Oszillator-Anordnung mit zwei gleichfrequente Signale abgebenden Oszillatoren die Oszillatoren abwechselnd mit den ihnen jeweils nachgeordneten Messspulen verbunden werden.

Sehr vorteilhaft ist es auch, wenn bei einer Oszillator-Anordnung mit einem einzigen Oszillator der Oszillator ausgangsseitig abwechselnd mit der ersten oder der zweiten Messspule verbunden wird, weil in diesem Falle die Oszillator-Anordnung mit einem einzigen Oszillator auskommt.

Die Erfindung betrifft ferner eine Anordnung zum Bestimmen des Abstandes einer in Richtung der Abstandsbestimmung profilierten, leitfähigen Oberfläche von einer sich relativ zu der Oberfläche bewegenden Funktionsfläche mit einer Messanordnung, bei der ein Sensor mit einer ersten und einer zweiten Messspule zum Erzeugen jeweils eines elektromagnetischen Wechselfeldes eingangsseitig mit einer Oszillator-Anordnung und ausgangsseitig mit seinen eine dem Abstand zwischen der ersten und der zweiten Messspule jeweils einerseits und der Oberfläche andererseits entsprechende erste und zweite Messgröße bereitstellenden Ausgängen über eine Demodulator-Einrichtung mit einer Analog-Digital-Wandlereinrichtung zur Gewinnung von den ersten und zweiten Messgrößen entsprechenden ersten und zweiten digitalen Messwerten verbunden sind und bei der an die Analog-Wandler-Einrichtung ein Rechenbaustein angeschlossen ist, und die zweite Messspule des Sensors auf der von der profilierten Oberfläche abgewandten Seite der ersten Messspule in einem vorgegebenen Abstand angeordnet ist, und der Rechenbaustein so ausgeführt, dass in ihm ein den Abstand der Funktionsfläche von der Oberfläche angebender Abstandsmesswert aus dem ersten und dem zweiten digitalen Messwert unter Berücksichtigung eines Referenz-Digitalwert und des festen Abstands errechnet wird.

Eine solche Anordnung ist in der oben bereits ausführlich behandelten deutschen Patentschrift DE 195 25 131 C2 beschrieben.

Der Erfindung liegt die Aufgabe zugrunde, diese Anordnung so weiterzuentwickeln, dass sie eine Messung des Abstandes der profilierten, leitenden Oberfläche von der Funktionsfläche unbeeinflusst von dem Profil der Oberfläche zulässt.

Zur Lösung dieser Aufgabe entspricht erfindungsgemäß der Referenz-Digitalwert dem Messwert einer außerhalb des Einflussbereichs der Oberfläche befindlichen, den Messspulen zugeordneten Referenzspule, und der Rechenbaustein ist so ausgeführt, dass in ihm der Abstandsmesswert nach der Beziehung

$$d = f\left(\frac{N1 - N3}{N2 - N1}.a\right)$$

oder nach der Beziehung

$$d = \frac{\ln(N1) - \ln(N3)}{\ln(N2) - \ln(N1)}.a$$

erfolgt, wobei N1 den ersten digitalen Messwert, N2 den zweiten digitalen Messwert, N3 einen Referenz-Digitalwert und a den festen Abstand bezeichnet.

Der wesentliche Vorteil der erfindungsgemäßen Anordnung besteht darin, dass bei ihr der Einfluss der Profilierung der leitfähigen Oberfläche auf die Abstandsmessung bei sich relativ zu dieser Oberfläche bewegenden Funktionsfläche weitestgehend eliminiert ist und dass auch Temperaturänderungen keinen nennenswerten Einflusse auf das Messergebnis haben.

Der Bestimmung des Abstandswerts nach der Beziehung

$$d = f\left(\frac{N1 - N3}{N2 - N1}.a\right)$$

wird immer dann der Vorzug gegeben, wenn der Sensor der erfindungsgemäßen Anordnung eine etwa lineare Kennlinie aufweist.

Ist dies nicht der Fall, dann wird es zur Erzielung einer linearisierten Kennlinie als vorteilhaft angesehen, wenn der Rechenbaustein so ausgeführt ist, dass in ihm die Bestimmung des Abstandes nach der Beziehung

$$d = \frac{\ln(N1) - \ln(N3)}{\ln(N2) - \ln(N1)}.a$$

erfolgt.

Bei der erfindungsgemäßen Anordnung kann tatsächlich eine Referenzspule vorhanden sein. Diese Referenzspule ist dann im Sensor so anzuordnen, dass sie außerhalb des Einflussbereiches der Oberfläche auf dem Sensor angeordnet ist. Die Referenzspule ist daher nicht in ihrer Impedanz von der leitenden Oberfläche beeinflusst und gestattet es, Temperatureinflüsse auf das Abstandsmessergebnis zu kompensieren.

Bei einer besonders vorteilhaften Ausführung der erfindungsgemäßen Anordnung ist dem Rechenbaustein ein Speicher zugeordnet, in dem der Referenz-Digitalwert gespeichert ist. In diesem Falle wird auf eine Referenzspule verzichtet und gewissermaßen fiktiv eine Referenzspule verwendet. Allerdings ist hierbei zu berücksichtigen, dass der Referenz-Digitalwert der jeweiligen Temperatur anzupassen ist.

Bei der erfindungsgemäßen Anordnung kann die Oszillator-Anordnung unterschiedlich ausgebildet sein. Als besonders vorteilhaft wird es angesehen, wenn die Oszillator-Anordnung zwei gleichfrequente Signale abgebende Oszillatoren aufweist und die Oszillatoren über eine Umschalteinrichtung mit den ihnen jeweils nachgeordneten Messspulen derart verbunden sind, dass nur jeweils eine Messspule mit ihrem vorgeordneten Oszillator verbunden ist. Durch eine derartige Anordnung ist sichergestellt, dass die Messspulen voneinander entkoppelt sind und sich nicht gegenseitig unter Verfälschung des Messergebnisses beeinflussen können.

Vorteilhaft kann es aber auch sein, wenn die Oszillator-Anordnung einen einzigen Oszillator aufweist und der Oszillator ausgangsseitig über einen Umschalter derart mit den beiden Messpulen verbunden ist, dass zu einer Zeit jeweils nur eine Messspule an den Oszillator angeschlossen ist. Der besondere Vorzug dieser Ausführungsform der erfindungsgemäßen Anordnung besteht darin, dass sie mit einem einzigen Oszillator auskommt.

Ist die erfindungsgemäße Anordnung mit einer Referenzspule ausgerüstet, dann wird es zur Erzielung einer möglichst einfach ausgestatteten Anordnung als vorteilhaft angesehen, wenn zwischen dem Sensor und der Demodulator-Einrichtung ein Multiplexer angeordnet ist, der vom Rechenbaustein taktgesteuert ist.

Zur Erzielung besonders zuverlässiger Messergebnisse wird es ferner als vorteilhaft angesehen, wenn die Oszillator-Anordnung als gleichfrequente Signale sinusförmige Spannungen und zwei um 90° in der Phase zueinander verschobene Rechteckspannungen abgibt, und die beiden Rechteckspannungen an Ansteuereingängen von zwei Demodulatoren liegen, die jeweils einer Messspule nachgeordnet sind und die Demodulator-Einrichtung bilden.

Als vorteilhaft wird es ferner angesehen, wenn die Umschalteinrichtung zwei synchron arbeitende Umschalter enthält und in einer Schaltstellung der Umschalteinrichtung über den einen Umschalter die erste Messspule an den Oszillator und über den anderen Umschalter gleichzeitig die zweite Messspule an eine Referenzspannungsquelle angeschlossen ist und in der anderen Schaltstellung der Umschalteinrichtung über den zweiten Umschalter die erste Messspule mit der Referenzspannungsquelle und gleichzeitig die zweite Messspule mit dem Oszillator verbunden ist. Diese Ausgestaltung der erfindungsgemäßen Anordnung ermöglicht es nämlich, Fremdstörungen durch äußere Einflüsse bzw. Magnetfelder, beispielsweise durch nebengeordnete weitere Sensoren zu eliminieren.

Ferner wird es als vorteilhaft angesehen, wenn zwischen der ersten Messspule und dem ihr nachgeordneten Demodulator ein erster Summierer und zwischen der zweiten Messspule und dem ihr nachgeordneten Demodulator ein zweiter Summierer angeordnet ist und ein der ersten Messspule nachgeschalteter Phasenschieber mit dem zweiten Summierer und ein der zweiten Messspule nachgeschalteter Phasenschieber mit dem ersten Summierer verbunden ist.

Zur weiteren Erläuterung der Erfindung ist in

Figur 1 schematisch ein gemäß der Erfindung aufgebauter Sensor in seiner Stellung bezüglich einer profilierten Oberfläche, in

Figur 2 ein weiteres Ausführungsbeispiel eines Sensors gemäß der Erfindung, in

Figur 3 ein Ausführungsbeispiel einer erfindungsgemäßen Messanordnung mit einer Referenzspule, in

Figur 4 ein weiteres Ausführungsbeispiel einer Messanordnung mit einem einzigen Oszillator und einem nachgeordneten Umschalter, in

Figur 5 ein zusätzliches Ausführungsbeispiel mit einem Oszillator und einem an Referenzspannungen angeschlossenen Umschalter, in

Figur 6 ein weiteres Ausführungsbeispiel mit einem Oszillator und einem an Referenzspannungen liegenden Umschalter mit Störsignalkompensation und in

Figur 7 ein Ausführungsbeispiel mit zwei Oszillatoren und Umschalter gezeigt.

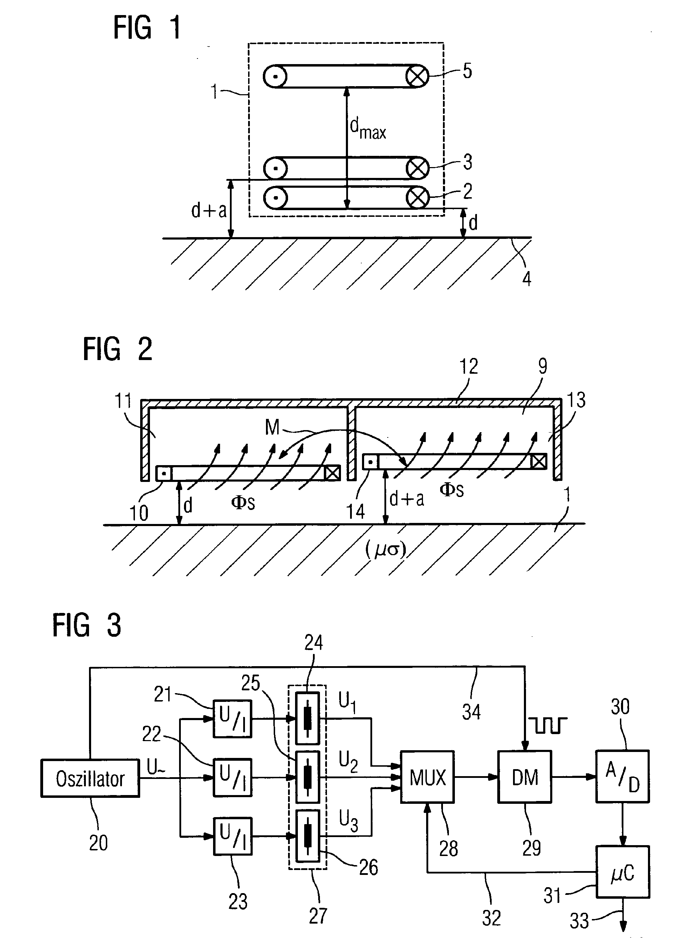

Wie die Figur 1 erkennen lässt, weist der dort dargestellte Sensor 1 eine erste Messspule 2 und eine zweite Messspule 3 auf. Die beiden Messspulen haben für sich betrachtet gleiche elektrische Kennwerte, wie Induktivität und Güte. Die beiden Messspulen 2 und 3 sind in einem vorgegebenen Abstand a voneinander angeordnet, und zwar senkrecht zu einer profilierten leitfähigen Oberfläche 4; der Abstand a ist dabei wesentlich kleiner als der Messbereich der Abstandsbestimmung. Die Oberfläche kann von der Oberfläche eines Stators eines Magnetschwebebahnsystems gebildet sein kann; Nuten und Zähne in einer solchen Oberfläche 4 bilden das Profil dieser Oberfläche und verlaufen senkrecht zur Zeichenebene in nicht dargestellter Weise nebeneinander. Der Sensor 1 ist in nicht dargestellter Weise mit einer relativ zur Oberfläche 4 bewegbaren Funktionsfläche verbunden, die bei einem Magnetschwebebahnsystem vom so genannten Tragmagneten des Magnetschwebebahnfahrzeugs gebildet ist.

Der Sensor 1 ist ferner mit einer Referenzspule 5 versehen, die außerhalb des Einflussbereiches der leitfähigen Oberfläche 4 angeordnet ist, also nicht durch Wirbelstromeffekte in der leitfähigen Oberfläche 4 beeinflusst ist. Der Abstand der Referenzspule 5 von der ersten Messspule 2 entspricht im dargestellten Ausführungsbeispiel dem maximalen Messbereich dmax des mit dem dargestellten Sensor 1 erfassbaren Abstandes d der Messspule 2 von der leitfähigen Oberfläche 4. Die Referenzspule 5 stimmt hinsichtlich Induktivität und Güte mit den beiden Messspulen 2 und 3 überein.

Bei dem in Figur 2 dargestellten Sensor 9 ist die Anordnung der ersten und zweiten Messspule anders vorgenommen. Hier ist die erste Messspule 10 in einem Bereich 11 eines Gehäuses 12 untergebracht, der gegenüber einem zweiten Bereich 13 abgeschirmt ist. In diesem zweiten Bereich 13 ist die zweite Messspule 14 untergebracht, und zwar wiederum in einem Abstand a gegenüber der ersten Messspule 10, wobei hier der Abstand a kleiner als die Höhe einer Messspule sein kann, weil die Messspulen 10 und 14 seitlich versetzt zueinander liegen. Mit "M" ist in der Figur 2 die magnetische Kopplung zwischen den beiden Messspulen und mit "$\varphi s$" der Einfluss eines Störfeldes, beispielsweise von einem benachbarten weiteren Sensor bezeichnet.

Figur 3 zeigt eine Messanordnung der erfindungsgemäßen Anordnung mit einem Oszillator 20, an den über jeweils einen Spannungsstromumsetzer 21, 22 und 23 eine hier nur schematisch dargestellte erste Messspule 24, eine zweite Messspule 25 und eine Referenzspule 26 eines im Übrigen nicht weiter dargestellten Sensors 27 angeschlossen sind.

Entsprechend den Abstandsänderungen des Sensors 27 auf einer nicht dargestellten Funktionsfläche von einer ebenfalls nicht gezeigten, profilierten Oberfläche liefern die Messspulen 24 und 25 an ihren Ausgängen Spannungen U1 und U2; dabei entspricht die Spannung U1 dem Abstand der ersten Messspule 24 von der hier nicht dargestellten leitenden Oberfläche und die Spannung U2 dem Abstand der zweiten Messspule 25 von der profilierten Oberfläche entsprechend den Impedanzänderungen der beiden Messspulen. Die Spannung U3 der Referenzspule 26 ist abstandsunabhängig und ist ein Maß für die jeweilige Temperatur am Sensor 27. Die Spannungen U1 bis U3 liegen eingangsseitig an einem Multiplexer 28, der ausgangsseitig mit einer Demodulator-Einrichtung in Form eines Deomodulators 29 verbunden ist. Dem Demodulator 29 ist ein Analog-Digital-Wandler 30 als Analog-Digital-Wandlereinrichtung nachgeschaltet, an dessen Ausgang ein Rechenbaustein 31 in Form eines Mikrocontrollers angeschlossen ist; der Rechenbaustein 31 steuert über eine Verbindungsleitung 32 den Multiplexer 28. An einem Ausgang 33 des Rechenbausteins 31 steht ein Abstandsmesswert Z an, der dem Abstand d gemäß Figuren 1 und 2 entspricht.

Die Messanordnung nach Figur 3 arbeitet in der Weise, dass die von dem Multiplexer 28 jeweils nacheinander an den Demodulator 29 abgegebenen Spannungen dort mittels von dem Oszillator 20 über eine Leitung 34 zugeführter Rechteckimpulse jeweils demoduliert werden. Die nacheinander am Ausgang des Demodulators 29 anstehenden Messgrößen werden im Analog-Digital-Wandler 30 in digitale Messwerte N1 bis N3 umgesetzt. Dabei ergibt sich N1 gemäß der Bezeichnung

$$N1 = \text{Im}(Zc) + k \cdot d \, ,$$

wobei Im(Zc) den Imaginäranteil der Koppelimpedanz der Messspule 24 und k einen Proportionalitätsfaktor bezeichnet. Der digitale Messwert N2 errechnet sich gemäß der Gleichung

$$N2 = \text{Im}(Zc) + k \cdot (d + a) \, ,$$

in der Im(Zc) den Imaginärteil der Koppelimpedanz der zweiten Messspule 25 und k wiederum einen Proportionalitätsfaktor beschreibt. Der Referenz-Digitalwert ist durch

$$N3 = \text{Im}(Zc)$$

gegeben, wobei Im(Zc) den Imaginärteil der Impedanz der Referenzspule 26 angibt. Die Koppelimpedanzen Zc der beiden Messspulen können in vorteilhafter Weise so ermittelt werden, wie es in der DE-A-103 32 761 beschrieben ist. Die Werte N1 bis N3 werden dann im Rechenbaustein 33 beispielsweise nach einer Beziehung

$$d = \frac{N1 - N3}{N2 - N1} \cdot a$$

ausgewertet, wobei N1 digitale Messwerte aufgrund der ersten Messspule 24, N2 digitale Messwerte aufgrund der zweiten Messspule 25 und N3 Referenz-Digitalwerte aufgrund der Referenzspule 26 sind; a ist dabei der in der Figur 3 nicht erkennbare konstante, bekannte Abstand zwischen der ersten Messspule 24 und der zweiten Messspule 25, wie er in Figur 1 beispielsweise gezeigt ist.

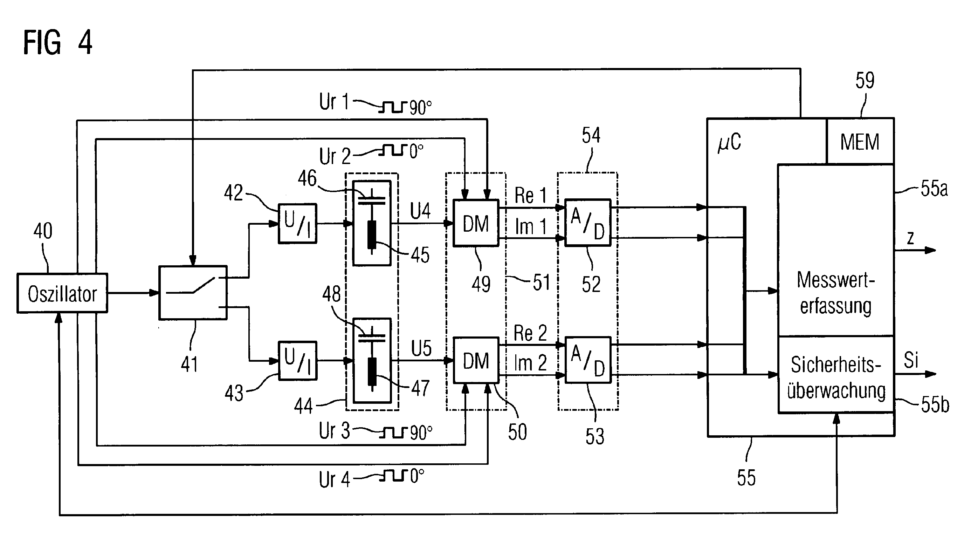

Bei dem Ausführungsbeispiel einer Messanordnung der erfindungsgemäßen Anordnung gemäß Figur 4 handelt es sich um einen im Wesentlichen zweikanaligen Aufbau, der allerdings zunächst einkanalig ausgeführt ist, indem ein einziger Oszillator 40 vorgesehen ist, der über eine Umschalteinrichtung 41 abwechselnd mit einem Spannungs-Stromumsetzer 42 oder einem weiteren Spannungs-Stromumsetzer 43 verbunden ist. Den Umsetzern 42 und 43 ist ein Sensor 44 nachgeordnet, und zwar in der Weise, dass eine hier nur schematisch dargestellte erste Messspule 45 in Reihe mit einem Kondensator 46 zur Bildung eines Resonanzkreises mit dem Ausgangsstrom des Umsetzers 42 beaufschlagt ist. Dem weiteren Spannungs-Stromumsetzer 43 ist eine zweite Messspule 47 in Reihe mit einem weiteren Kondensator 48 unter Bildung eines Resonanzkreises nachgeordnet.

Die am Ausgang des Sensors 44 auftretenden Spannungen U4 und U5 liegen eingangsseitig an jeweils einem Demodulator 49 bzw. 50 einer Demodulator-Einrichtung 51. Jeder Demodulator 49 bzw. 50 wird von dem Oszillator 40 mit zwei 90° gegeneinander phasenverschobenen Rechteckspannungen Ur1 und Ur2 bzw. Ur3 und Ur4 beaufschlagt. Damit ergeben sich an den Ausgängen der Demodulatoren 49 und 50 in bekannter Weise dem Realteil Re1 bzw. Re2 und dem Imaginärteil Im1 bzw. Im2 der Impedanzen der ersten und der zweiten Messspule 45 bzw. 47 entsprechende Messgrößen, die in nachgeordneten Analog-Digital-Wandlern 52 und 53 einer Analog-Digital-Wandlereinrichtung 54 in digitale Messwerte umgesetzt werden.

Die digitalen Messwerte N1 und N2 am Ausgang der Analog-Digital-Wandler 52 und 53 werden in einem Rechenbaustein 55 nach der oben angegebenen Beziehung ausgewertet und führen an einem Ausgang 54 zu einem Abstandsmesswert Z, der dem jeweiligen Abstand d (vgl. z. B. Figur 1) der Funktionsfläche von einer profilierten leitfähigen Oberfläche entspricht. Dies erfolgt in einer Funktion Messwert-Erfassung 55a des Rechenbausteins 55, der außerdem mit einem Speicher 59 versehen ist, in dem ein Referenz-Digitalwert entsprechend einer fiktiven Referenzspule gespeichert ist. Aus diesem Speicher 59 wird ein Referenz-Digitalwert N3 abgefragt. Der Referenz-Digitalwert N3 kann in nicht dargestellter Weise mittels eines Temperaturfühlers mit nachgeordneter Elektronik der jeweiligen Temperatur der Messanordnung nachgeführt werden.

Wie die Figur 4 ferner zeigt, ist in dem Rechenbaustein 55 eine Sicherheitsüberwachung 55b als Funktion vorgesehen, die den digitalen Messwert N1 bzw. N2 der ersten und der zweiten Messspule 45 bzw. 47 jeweils für sich in einen Abstandsmesswert umwandelt und überprüft, ob die Differenz der ermittelten Abstandsmesswerte mit gewissen Toleranzen dem Abstand a entsprechen. Werden die Toleranzgrenzen eingehalten, wird ein Signal Si vom Rechenbaustein 55 abgegeben, das anzeigt, dass die Messung in Ordnung ist. Weiterhin wird in der Sicherheitsüberwachung 55b die korrekte Funktion des Oszillators 40 überprüft.

Die Umschalteinrichtung 41 ist übrigens vom Taktgeber des Rechenbausteins 55 taktgesteuert.

Bei der Messanordnung nach Figur 4 ist nicht nur der Abstandsmesswert korrekt ermittelt und die richtige Arbeitsweise überwacht, sondern auch der Einfluss der Kopplung zwischen den beiden Messspulen durch den Einsatz der Umschalteinrichtung 41 eliminiert.

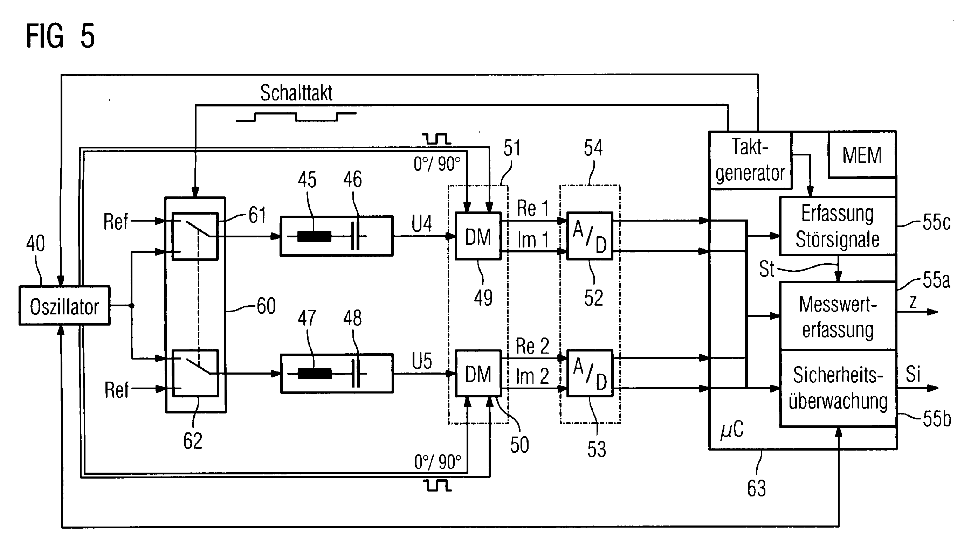

Die in Figur 5 dargestellte Messanordnung stimmt in großen Teilen mit der nach Figur 4 überein, weshalb hier zunächst auf die Beschreibung zur Figur 4 ausdrücklich Bezug genommen wird; mit Elementen nach Figur 4 übereinstimmende Teile in Figur 5 sind mit denselben Bezugszeichen versehen.

Eine Abweichung der Anordnung nach Figur 5 von der nach Figur 4 besteht darin, dass hier eine Umschalteinrichtung 60 mit zwei Umschaltern 61 und 62 verwendet wird, mit denen in einem Schaltzustand die erste Messspule 45 an eine Referenzspannung-Ref und die zweite Messspule 47 an den Ausgang des Oszillators 40 anschließbar ist. In einer zweiten Schaltstellung der Umschalter 61 und 62 ist die erste Messspule 45 an den Ausgang des Oszillators 40 und die zweite Messspule 47 an die Referenzspannung Ref angeschlossen.

Liegt bei der Messanordnung nach Figur 5 beispielsweise die erste Messspule 45 an der Referenzspannung, dann kann die Störumgebung der ersten Messspule 45 erfasst werden. Liegt die erste Messspule 45 am Ausgang des Oszillators 40, dann wird ein Messwert entsprechend dem Abstand d (siehe z. B. Figur 1) erfasst. Entsprechend arbeitet die zweite Messspule 47, so dass von dem Rechenbaustein 63 die zu einem Zeitpunkt von der beispielsweise ersten Messspule 45 ermittelten Abstandswerte mit der von der zweiten Messspule 47 ermittelten Störungen verrechnet werden können und in einer Funktion 55c ein Störsignal St ermittelt werden kann, das dann in der Funktion Messwerterfassung 55a berücksichtigt wird.

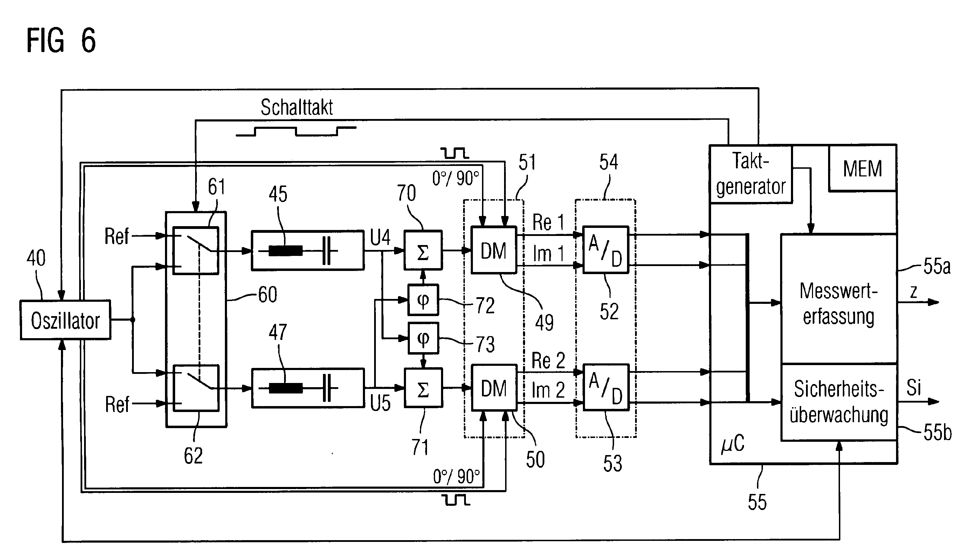

Eine andere Art, auftretende Störungen zu eliminieren zeigt die Figur 6, die eine Messanordnung ähnlich der nach Figur 5 zeigt, so dass auch hier wiederum der Einfachheit halber zunächst auf die Beschreibung zu Figur 5 verwiesen wird. Abweichend von der Ausführungsform nach Figur 5 ist bei der Messanordnung nach Figur 6 den Messspulen 45 und 47 jeweils ein Summierer 70 und 71 mit jeweils einem Eingang nachgeordnet. Ein jeweils weiterer Eingang der Summierer 70 und 71 ist über einen Phasenschieber 72 bzw. 73 mit dem Ausgang der jeweils anderen - nicht direkt vorgeordneten - Messspule 47 bzw. 45 verbunden sind. In den Summierern 70 und 71 werden die Störungen eliminiert, so dass bei diesem Ausführungsbeispiel die den Demodulatoren 49 und 50 zugeführten Messwerte frei von Störungen sind und so weiter verarbeitet werden können, wie es im Zusammenhang mit der Figur 4 beschrieben worden ist.

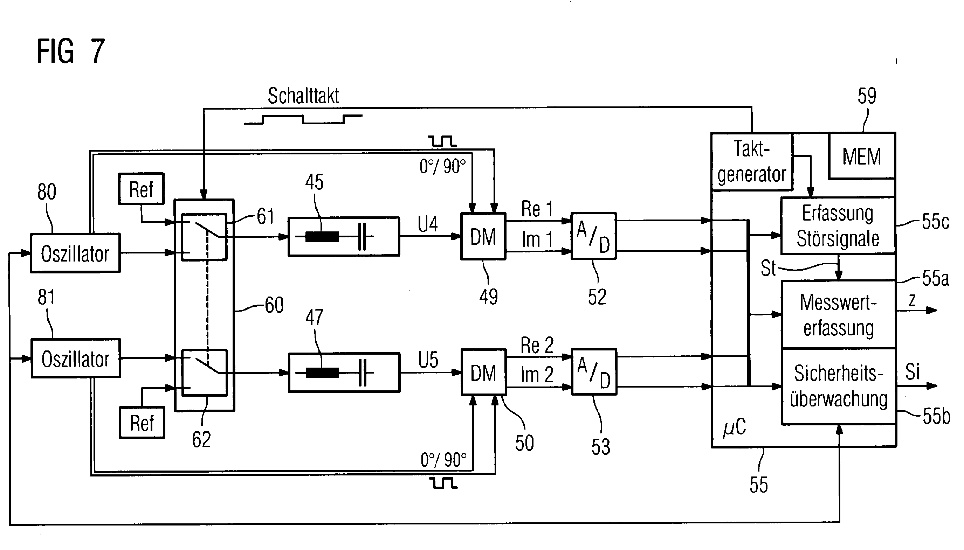

Das Ausführungsbeispiel nach Figur 7 entspricht weitgehend dem nach Figur 5; eine wesentliche Abweichung besteht hier nur darin, dass zwei Oszillatoren 80 und 81 verwendet werden, die jeweils für sich an die Umschalter 61 und 62 der Umschalteinrichtung 60 angeschlossen sind. Ansonsten ist eine Übereinstimmung mit der Messanordnung nach Figur 5 gegeben.

**Patentansprüche**

1. Verfahren zum Bestimmen des Abstandes einer in Richtung der Abstandsbestimmung profilierten, leitfähigen Oberfläche von einer sich relativ zu der Oberfläche bewegenden Funktionsfläche mit einer Messanordnung, bei der

   • ein Sensor mit einer ersten und einer zweiten Messspule zum Erzeugen jeweils eines elektromagnetischen Wechselfeldes eingangsseitig mit einer Oszillator-Anordnung und ausgangsseitig mit seinen eine dem Abstand zwischen der ersten und der zweiten Messspule jeweils einerseits und der Oberfläche andererseits entsprechende erste und zweite Messgröße bereitstellenden Ausgängen über eine Demodulator-Einrichtung mit einer Analog-Digital-Wandlereinrichtung zur Gewinnung von den ersten und zweiten Messgrößen entsprechenden ersten und zweiten digitalen Messwerte verbunden sind,
   • an die Analog-Digital-Wandler-Einrichtung ein Rechenbaustein angeschlossen ist,
   • ein Sensor (1) eingesetzt wird, dessen zweite Messspule (3) auf der von der profilierten Oberfläche (4) abgewandten Seite der ersten Messspule (2) in einem festen, bekannten Abstand von der ersten Messspule (2) angeordnet ist, und
   • im Rechenbaustein (31) ein den Abstand der Funktionsfläche von der Oberfläche (4) angebender Abstandsmesswert aus dem ersten und dem zweiten digitalen Messwert (N1, N2) unter Berücksichtigung eines Referenz-Digitalwertes (N3) und des festen Abstands errechnet wird,

**dadurch gekennzeichnet, dass**
der Referenz-Digitalwert (N3) dem Messwert einer außerhalb des Einflussbereichs der Oberfläche (4) befindlichen, den Messspulen (2, 3) zugeordneten Referenzspule (5) entspricht, und im Rechenbaustein (31) ein den Abstand der Funktionsfläche von der Oberfläche (4) angebender Abstandsmesswert nach der Beziehung

$$d = f\left(\frac{N1 - N3}{N2 - N1} . a\right)$$

oder nach der Beziehung

$$d = \frac{\ln(N1) - \ln(N3)}{\ln(N2) - \ln(N1)} . a$$

erfolgt, wobei N1 den ersten digitalen Messwert, N2 den zweiten digitalen Messwert, N3 den Referenz-Digitalwert und a den festen Abstand bezeichnet.

2. Verfahren nach Anspruch 1,
   **dadurch gekennzeichnet, dass**

   • der Referenz-Digitalwert (N3) mittels einer Referenzspule (5) des Sensors (1) gewonnen wird, die den Messspulen (2, 3) benachbart außerhalb des Einflussbereichs der Oberfläche (4) angeordnet ist.

3. Verfahren nach Anspruch 1,
   **dadurch gekennzeichnet, dass**

   • der Referenz-Digitalwert (N3) in einem Speicher (59) des Rechenbausteins (55) gespeichert ist und bei der Bestimmung des Abstandes aus dem Speicher (59) abgerufen wird.

4. Verfahren nach einem der vorangehenden Ansprüche,
   **dadurch gekennzeichnet, dass**

   • aus dem ersten und dem zweiten digitalen Messwert (N1, N2) im Rechenbaustein (55) durch Umsetzung jeweils eine erste und eine zweite digitale Abstandsmessgröße gebildet wird,
   • die beiden digitalen Abstandsmessgrößen unter Gewinnung einer Vergleichsgröße miteinander verglichen werden und
   • bei einer dem festen Abstand zwischen den Messspulen (45, 47) entsprechenden Vergleichsgröße von dem Rechenbaustein (55) ein Sensor-Sicherheitssignal (Si) erzeugt wird.

5. Verfahren nach einem der vorangehenden Ansprüche,
   **dadurch gekennzeichnet, dass**

   • mittels einer Umschalteinrichtung (60) in einem Schaltzustand der Eingang der ersten Messspule (45) an eine Referenzspannung (Ref) angeschlossen wird und der Eingang der zweiten Messspule (47) mit der Oszillatorfrequenz beaufschlagt wird und in einem weiteren Schaltzustand der Eingang der zweiten Messspule (47) an die Referenzspannung (Ref) angeschlossen wird und der Eingang der ersten Messspule (45) mit der Oszillatorfrequenz beaufschlagt wird und
   • aus den sich in den verschiedenen Schaltzuständen am Ausgang der Analog-Wandler-Einrichtung (54) ergebenden Signalen im Rechenbaustein (63) ein Störsignal (St) ermittelt wird.

6. Verfahren nach einem der vorangehenden Ansprüche,
   **dadurch gekennzeichnet, dass**

   • die beiden Messspulen (45, 47) von der Oszillator-Anordnung (40) mit gleichfrequenten Signalen beaufschlagt werden und
   • die Beaufschlagung mit den gleichfrequenten Signalen abwechselnd derart erfolgt, dass zu einer Zeit nur jeweils eine Messspule (45, 47) beaufschlagt ist.

7. Verfahren nach Anspruch 6,
   **dadurch gekennzeichnet, dass**

   • bei einer Oszillator-Anordnung mit zwei gleichfrequente Signale abgebenden Oszillatoren die Oszillatoren abwechselnd angesteuert werden.

8. Verfahren nach Anspruch 6,
   **dadurch gekennzeichnet, dass**

   • bei einer Oszillator-Anordnung mit zwei gleichfrequente Signale abgebenden Oszillatoren (80, 81) die Oszillatoren (80, 81) abwechselnd mit den ihnen jeweils nachgeordneten Messspulen (45, 47) verbunden werden.

9. Verfahren nach Anspruch 6,
   **dadurch gekennzeichnet, dass**

   • bei einer Oszillator-Anordnung mit einem einzigen Oszillator der Oszillator (40) ausgangsseitig abwechselnd mit der ersten oder der zweiten Messspule (45, 47) verbunden wird.

10. Anordnung zum Bestimmen des Abstandes einer in Richtung der Abstandsbestimmung profilierten, leitfähigen Oberfläche von einer sich relativ zu der Oberfläche bewegenden Funktionsfläche mit einer Messanordnung, bei der

• ein Sensor mit einer ersten und einer zweiten Messspule zum Erzeugen jeweils eines elektromagnetischen Wechselfeldes eingangsseitig mit einer Oszillator-Anordnung und ausgangsseitig mit seinen eine dem Abstand zwischen der ersten und der zweiten Messspule jeweils einerseits und der Oberfläche andererseits entsprechende erste und zweite Messgröße bereitstellenden Ausgängen über eine Demodulator-Einrichtung mit einer Analog-Digital-Wandlereinrichtung zur Gewinnung von den ersten und zweiten Messgrößen entsprechenden ersten und zweiten digitalen Messwerte verbunden sind,
• an die Analog-Wandler-Einrichtung ein Rechenbaustein angeschlossen ist,
• die zweite Messspule (3) des Sensors (1) auf der von der profilierten Oberfläche (4) abgewandten Seite der ersten Messspule (2) in einem vorgegebenen Abstand angeordnet ist, und
• der Rechenbaustein (31) so ausgeführt ist, dass in ihm ein den Abstand der Funktionsfläche von der Oberfläche (4) angebender Abstandsmesswert aus dem ersten und dem zweiten digitalen Messwert (N1, N2) unter Berücksichtigung eines Referenz-Digitalwert (N3) und des festen Abstands errechnet wird,

**dadurch gekennzeichnet, dass**
der Referenz-Digitalwert (N3) dem Messwert einer außerhalb des Einflussbereichs der Oberfläche (4) befindlichen, den Messspulen (2, 3) zugeordneten Referenzspule (5) entspricht und der Rechenbaustein (31) so ausgeführt ist, dass in ihm der Abstandsmesswert nach der Beziehung

$$d = f\left(\frac{N1 - N3}{N2 - N1}.a\right)$$

oder nach der Beziehung

$$d = \frac{\ln(N1) - \ln(N3)}{\ln(N2) - \ln(N1)}.a$$

erfolgt, wobei N1 den ersten digitalen Messwert, N2 den zweiten digitalen Messwert, N3 einen Referenz-Digitalwert und a den festen Abstand bezeichnet.

11. Anordnung nach Anspruch 10, **dadurch gekennzeichnet, dass**

• die Referenzspule (5) außerhalb des Einflussbereichs der Oberfläche (4) auf dem Sensor (1) angeordnet ist.

12. Anordnung nach Anspruch 10, **dadurch gekennzeichnet, dass**

• dem Rechenbaustein ein Speicher (59) zugeordnet ist, in dem der Referenz-Digitalwert (N3) gespeichert ist.

13. Anordnung nach einem der Ansprüche 10 bis 12, **dadurch gekennzeichnet, dass**

• die Oszillator-Anordnung zwei gleichfrequente Signale abgebende Oszillatoren (80, 81) aufweist und
• die Oszillatoren (80, 81) über eine Umschalteinrichtung (60) mit den ihnen jeweils nachgeordneten Messspulen (45, 47) derart verbunden sind, dass nur jeweils eine Messspule (45, 47) mit ihrem vorgeordneten Oszillator (80, 81) verbunden sind.

14. Anordnung nach einem der Ansprüche 10 bis 13, **dadurch gekennzeichnet, dass**

• die Oszillator-Anordnung einen einzigen Oszillator (40) aufweist und
• der Oszillator (40) ausgangsseitig über einen Umschalter (41) derart mit den beiden Messspulen (45, 47) verbunden ist, dass zu einer Zeit jeweils nur eine Messspule (45, 47) an den Oszillator (40) angeschlossen ist.

15. Anordnung nach Anspruch 11, **dadurch gekennzeichnet, dass**

• zwischen dem Sensor (27) und der Demodulator-Einrichtung (29) ein Multiplexer (28) angeordnet ist, der vom Rechenbaustein (31) taktgesteuert ist.

16. Anordnung nach einem der Ansprüche 10 bis 15, **dadurch gekennzeichnet, dass**

• die Oszillator-Anordnung (40) als gleichfrequente Signale sinusförmige Spannungen und jeweils zwei um 90° in der Phase zueinander verschobene Rechteckspannungen (Ur1, Ur2, Ur3, Ur4) abgibt und
• die Rechteckspannungen (Ur1, Ur2, Ur3, Ur4) an Ansteuereingängen von zwei Demodulatoren (49, 50) liegen, die jeweils einer Messspule (45, 47) nachgeordnet sind und die Demodulator-Einrichtung (51) bilden.

**17.** Anordnung nach Anspruch 13 oder 16
**dadurch gekennzeichnet, dass**

• die Umschalteinrichtung (60) zwei synchron arbeitende Umschalter (61, 62) enthält und
• in einer Schaltstellung der Umschalteinrichtung (60) über den einen Umschalter (61) die erste Messspule (45) an den Oszillator (40) und über den anderen Umschalter (62) gleichzeitig die zweite Messspule (47) an eine Referenzspannungsquelle (Ref) angeschlossen ist und in der anderen Schaltstellung der Umschalteinrichtung (60) die erste Messspule (45) mit der Referenzspannungsquelle (Ref) und gleichzeitig die zweite Messspule (47) mit dem Oszillator (40) verbunden ist.

**18.** Anordnung nach Anspruch 16 der 17,
**dadurch gekennzeichnet, dass**

• zwischen der ersten Messspule (45) und dem ihr nachgeordneten Demodulator (49) ein erster Summierer (70) und zwischen der zweiten Messspule (47) und dem ihr nachgeordneten Demodulator (50) ein zweiter Summierer (71) angeordnet ist und
• ein der ersten Messspule (45) nachgeschalteter Phasenschieber (72) mit dem zweiten Summierer (71) und ein der zweiten Messspule (47) nachgeschalteter Phasenschieber (73) mit dem ersten Summierer (70) verbunden ist.

**Claims**

**1.** Method for determining the distance of a conducting surface, which is profiled in the direction of distance determination, from a functional surface moving relative to the profiled surface, using a measuring arrangement, in which

• a sensor having a first and a second measuring coil for generating an alternating electromagnetic field in each case is connected on its input side to an oscillator arrangement, and on its output side is connected by its outputs, which provide a first and second measurement corresponding to the distance between the profiled surface and the first and second measuring coil respectively, to an analog-to-digital converter unit via a demodulator unit in order to obtain first and second digital measured-values corresponding to the first and second measurements,
• an arithmetic unit is connected to the analog converter unit,
• a sensor (1) is used whose second measuring coil (3) is arranged at a fixed, known distance from the first measuring coil (2) on that side of the first measuring coil (2) that faces away from the profiled surface (4), and
• the arithmetic unit (31) uses the first and second digital measured-value (N1, N2) and a reference digital value (N3) and the fixed distance to calculate a distance measured-value giving the distance of the functional surface from the profiled surface (4),

**characterized in that** the reference digital value (N3) corresponds to the measured value from a reference coil (5) assigned to the measuring coils (2, 3) and located outside the range of influence of the profiled surface (4) and the arithmetic unit (31) determines a distance measured-value giving the distance of the functional surface from the profiled surface (4) using the equation

$$d = f\left(\frac{N1 - N3}{N2 - N1} \cdot a\right)$$

or using the equation

$$d = \frac{\ln(N1) - \ln(N3)}{\ln(N2) - \ln(N1)} \cdot a$$

where N1 is the first digital measured-value, N2 is the second digital measured-value, N3 is the reference digital value, and a is the fixed distance.

**2.** Method according to Claim 1,
**characterized in that**

• the reference digital value (N3) is obtained by means of a reference coil (5) of the sensor (1), said reference coil being located adjacent to the measuring coils (2, 3) outside the range of influence of the profiled surface (4).

**3.** Method according to Claim 1,
**characterized in that**

• the reference digital value (N3) is stored in a memory (59) of the arithmetic unit (55) and is retrieved from the memory (59) when determining the distance.

**4.** Method according to any of the preceding claims,
**characterized in that**

• a first and a second digital distance measurement respectively is formed from the first and the second digital measured-value (N1, N2) by conversion in the arithmetic unit (55),

• the two digital distance measurements are compared with each other, obtaining a comparison value, and

• a sensor reliability signal (Si) is generated by the arithmetic unit (55) if a comparison value equals the fixed distance between the measuring coils (45, 47).

5. Method according to any of the preceding claims, **characterized in that**

• a changeover-switch unit (60) is used to connect the input of the first measuring coil (45) to a reference voltage (Ref), and to apply the oscillator frequency to the input of the second measuring coil (47) in a first switch state, and in another switch state to connect the input of the second measuring coil (47) to the reference voltage (Ref), and to apply the oscillator frequency to the input of the first measuring coil (45), and

• the arithmetic unit (63) determines an interference signal (St) from the signals produced at the output of the analog converter unit (54).

6. Method according to any of the preceding claims, **characterized in that**

• signals of identical frequency are applied to the two measuring coils (45, 47) by the oscillator arrangement (40), and

• the signals of identical frequency are applied alternately in such a way that a signal is only applied to one measuring coil (45, 47) at a time.

7. Method according to Claim 6, **characterized in that**

• for an oscillator arrangement having two oscillators outputting two signals of identical frequency, the oscillators are alternately activated.

8. Method according to Claim 6, **characterized in that**

• for an oscillator arrangement having two oscillators (80, 81) outputting two signals of identical frequency, the oscillators (80, 81) are alternately connected to their respective output-side measuring coils (45, 47).

9. Method according to Claim 6, **characterized in that**

• for an oscillator arrangement having a single oscillator, the oscillator (40) is alternately connected on its output side to the first or the second measuring coil (45, 47).

10. System for determining the distance of a conducting surface, which is profiled in the direction of distance determination, from a functional surface moving relative to the profiled surface, having a measuring arrangement, in which

• a sensor having a first and a second measuring coil for generating an alternating electromagnetic field in each case is connected on its input side to an oscillator arrangement, and on its output side is connected by its outputs, which provide a first and second measurement corresponding to the distance between the profiled surface and the first and second measuring coil respectively, to an analog-to-digital converter unit via a demodulator unit in order to obtain first and second digital measured-values corresponding to the first and second measurements,

• an arithmetic unit is connected to the analog converter unit,

• the second measuring coil (3) of the sensor (1) is arranged at a preset distance on that side of the first measuring coil (2) that faces away from the profiled surface (4), and

• the arithmetic unit (31) is designed to use the first and second digital measured-value (N1, N2) and a reference digital value (N3) and the fixed distance to calculate a distance measured-value giving the distance of the functional surface from the profiled surface (4),

**characterized in that** the reference digital value (N3) corresponds to the measured value from a reference coil (5) assigned to the measuring coils (2, 3) and located outside the range of influence of the profiled surface (4) and the arithmetic unit (31) is designed so that it can determine the distance measured-value using the equation

$$d = f\left(\frac{N1 - N3}{N2 - N1} \cdot a\right)$$

or using the equation

$$d = \frac{\ln(N1) - \ln(N3)}{\ln(N2) - \ln(N1)} \cdot a$$

where N1 is the first digital measured-value, N2 is the second digital measured-value, N3 is a reference digital value, and a is the fixed distance.

11. System according to Claim 10,
**characterized in that**

• the reference coil (5) is arranged on the sensor (1) outside the range of influence of the profiled surface (4).

12. System according to Claim 10,
**characterized in that**

• a memory (59) is assigned to the arithmetic unit, in which the reference digital value (N3) is stored.

13. System according to any of Claims 10 to 12,
**characterized in that**

• the oscillator arrangement comprises two oscillators (80, 81) outputting signals of identical frequency, and
• the oscillators (80, 81) are connected via a changeover-switch unit (60) to their respective output-side measuring coils (45, 47) in such a way that only one measuring coil (45, 47) at a time is connected to its input-side oscillator (80, 81).

14. System according to any of Claims 10 to 13,
**characterized in that**

• the oscillator arrangement has a single oscillator (40), and
• the oscillator (40) is connected on the output side via a changeover switch (41) to the two measuring coils (45, 47) in such a way that only one measuring coil (45, 47) at a time is connected to the oscillator (40).

15. System according to Claim 11,
**characterized in that**

• a multiplexer (28), clocked by the arithmetic unit (31), is arranged between the sensor (27) and the demodulator unit (29).

16. System according to any of Claims 10 to 15,
**characterized in that**

• the oscillator arrangement (40) outputs as signals of identical frequency sinusoidal voltages and a respective pair of two square-wave voltages mutually phase shifted by 90° (Ur1, Ur2, Ur3, Ur4), and
• the square-wave voltages (Ur1, Ur2, Ur3, Ur4) are applied to control inputs of two demodulators (49, 50),

each of which are arranged at the output of a measuring coil (45, 47) and form the demodulator unit (51).

17. System according to Claim 13 or 16,
**characterized in that**

• the changeover-switch unit (60) contains two synchronously operating changeover switches (61, 62), and
• in one switch setting of the changeover-switch unit (60), the first measuring coil (45) is connected to the oscillator (40) via the one changeover switch (61), and simultaneously the second measuring coil (47) is connected to a reference-voltage source (Ref) via the other changeover switch (62), and in the other switch setting of the changeover-switch unit (60), the first measuring coil (45) is connected to the reference-voltage source (Ref), and simultaneously the second measuring coil (47) is connected to the oscillator (40).

18. System according to Claim 16 or 17,
**characterized in that**

• a first summing unit (70) is arranged between the first measuring coil (45) and the demodulator (49) arranged on its output side, and a second summing unit (71) is arranged between the second measuring coil (47) and the demodulator (50) arranged on its output side, and

a phase shifter (72) connected to the output of the first measuring coil (45) is connected to the second summing unit (71), and a phase shifter (73) connected to the output of the second measuring coil (47) is connected to the first summing unit (70).

**Revendications**

1. Procédé de détermination de la distance d'une surface conductrice profilée dans le sens de la détermination de surface à une surface fonctionnelle se déplaçant par rapport à la surface par un dispositif de mesure, selon lequel

- un capteur comportant une première et une deuxième bobine de mesure pour produire respectivement un champ alternatif électromagnétique est relié côté entrée à un dispositif oscillateur et côté sortie, par ses sorties fournissant une première et une deuxième grandeur mesurée correspondant à la distance entre respectivement la première et la deuxième bobine de mesure d'une part et la surface d'autre part, par l'intermédiaire d'un dispositif démodulateur, à un dispositif convertisseur analogique-numérique pour obtenir des premières et deuxièmes valeurs mesurées numériques correspondant aux premières et deuxièmes grandeurs mesurées,

- un composant de calcul est raccordé au dispositif convertisseur analogique-numérique,

- un capteur ( 1 ) est utilisé, capteur dont la deuxième bobine de mesure ( 3 ) est disposée sur celui des côtés de la première bobine de mesure ( 2 ) qui est éloigné de la surface profilée ( 4 ) et à une distance fixe connue de la première bobine de mesure ( 2 ), et

- dans le composant de calcul ( 31 ), une valeur mesurée de distance indiquant la distance de la surface fonctionnelle à la surface ( 4 ) est calculée à partir de la première et de la deuxième valeur mesurée numérique ( N1, N2 ) en tenant compte d'une valeur numérique de référence ( N3 ) et de la distance fixe,

**caractérisé par le fait que** la valeur numérique de référence ( N3 ) correspond à la valeur mesurée d'une bobine de référence ( 5 ) qui se trouve en dehors de la zone d'influence de la surface ( 4 ) et qui est associée aux bobines de mesure ( 2, 3 ) et que, dans le composant de calcul ( 31 ), une valeur mesurée de distance indiquant la distance de la surface fonctionnelle à la surface ( 4 ) est déterminée selon la relation

$$d = f\left(\frac{N1-N3}{N2-N1}, a\right)$$

ou selon la relation

$$d = \frac{\ln(N1) - \ln(N3)}{\ln(N2) - \ln(N1)} a$$

N1 désignant la première valeur mesurée numérique, N2 la deuxième valeur mesurée numérique, N3 la valeur numérique de référence et *a* la distance fixe.

2. Procédé selon la revendication 1, **caractérisé par le fait que** la valeur numérique de référence ( N3 ) est obtenue au moyen d'une bobine de référence ( 5 ) du capteur ( 1 ) qui est disposée au voisinage des bobines de mesure ( 2, 3 ) en dehors de la zone d'influence de la surface ( 4 ).

3. Procédé selon la revendication 1, **caractérisé par le fait que** la valeur numérique de référence ( N3 ) est mémorisée dans une mémoire ( 59 ) du composant de calcul ( 55 ) et est demandée à la mémoire ( 59 ) lors de la détermination de la distance.

4. Procédé selon l'une des revendications précédentes, **caractérisé par le fait que**

- une première et une deuxième grandeur mesurée de distance numérique sont formées dans le composant de calcul ( 55 ) par conversion respectivement à partir de la première et de la deuxième valeur mesurée numérique ( N1, N2 ),

- les deux grandeurs mesurées de distance numériques sont comparées l'une à l'autre de manière à obtenir une grandeur de comparaison et

- un signal de fiabilité de capteur ( Si ) est produit par le composant de calcul ( 55 ) en présence d'une grandeur de comparaison correspondant à la distance fixe entre les bobines de mesure ( 45, 47 ).

5. Procédé selon l'une des revendications précédentes, **caractérisé par le fait que**

- au moyen d'un dispositif de commutation ( 60 ), dans un certain état de commutation, l'entrée de la première bobine de mesure ( 45 ) est raccordée à une tension de référence ( Ref ) et l'entrée de la deuxième bobine de mesure ( 47 ) est alimentée avec la fréquence d'oscillateur et, dans un autre état de commutation, l'entrée de la deuxième bobine de mesure ( 47 ) est raccordée à la tension de référence ( Ref ) et l'entrée de la première bobine de mesure ( 45 ) est alimentée avec la fréquence d'oscillateur et

- un signal de perturbation ( St ) est déterminé dans le composant de calcul ( 63 ) à partir des signaux apparaissant à la sortie du dispositif convertisseur analogique-numérique ( 54 ) dans les différents états de commutation.

6. Procédé selon l'une des revendications précédentes, **caractérisé par le fait que**

- les deux bobines de mesure ( 45, 47 ) sont alimentées avec des signaux de même fréquence par le dispositif oscillateur ( 40 ) et

- l'alimentation avec les signaux de même fréquence s'effectue en alternance de telle sorte que, à un instant donné, une seule bobine de mesure ( 45, 47 ) est alimentée.

7. Procédé selon la revendication 6, **caractérisé par le fait que**, dans le cas d'un dispositif oscillateur comportant deux oscillateurs délivrant des signaux de même fréquence, les oscillateurs sont commandés en alternance.

**8.** Procédé selon la revendication 6, **caractérisé par le fait que**, dans le cas d'un dispositif oscillateur comportant deux oscillateurs ( 80, 81 ) délivrant des signaux de même fréquence, les oscillateurs ( 80, 81 ) sont reliés en alternance avec les bobines de mesure ( 45, 47 ) montées respectivement en aval.

**9.** Procédé selon la revendication 6, **caractérisé par le fait que**, dans le cas d'un dispositif oscillateur comportant un seul oscillateur, l'oscillateur ( 40 ) est relié en sortie en alternance à la première ou à la deuxième bobine de mesure ( 45, 47 ).

**10.** Dispositif de détermination de la distance d'une surface conductrice profilée dans le sens de la détermination de surface à une surface fonctionnelle se déplaçant par rapport à la surface avec un dispositif de mesure, selon lequel

- un capteur comportant une première et une deuxième bobine de mesure pour produire respectivement un champ alternatif électromagnétique est relié côté entrée à un dispositif oscillateur et côté sortie, par ses sorties fournissant une première et une deuxième grandeur mesurée correspondant à la distance entre respectivement la première et la deuxième bobine de mesure d'une part et la surface d'autre part, par l'intermédiaire d'un dispositif démodulateur, à un dispositif convertisseur analogique-numérique pour obtenir des premières et deuxièmes valeurs mesurées numériques correspondant aux premières et deuxièmes grandeurs mesurées,
- un composant de calcul est raccordé au dispositif convertisseur analogique-numérique,
- la deuxième bobine de mesure ( 3 ) du capteur ( 1 ) est disposée sur celui des côtés de la première bobine de mesure ( 2 ) qui est éloigné de la surface profilée ( 4 ) et à une distance prescrite, et
- le composant de calcul ( 31 ) est réalisé de telle sorte que, dans celui-ci, une valeur mesurée de distance indiquant la distance de la surface fonctionnelle à la surface ( 4 ) est calculée à partir de la première et de la deuxième valeur mesurée numérique ( N1, N2 ) en tenant compte d'une valeur numérique de référence ( N3 ) et de la distance fixe,

**caractérisé par le fait que** la valeur numérique de référence ( N3 ) correspond à la valeur mesurée d'une bobine de référence ( 5 ) qui se trouve en dehors de la zone d'influence de la surface ( 4 ) et qui est associée aux bobines de mesure ( 2, 3 ) et que le composant de calcul ( 31 ) est réalisé de telle sorte que, dans celui-ci, la valeur mesurée de distance est déterminée selon la relation

$$ d = f\left( \frac{N1 - N3}{N2 - N1} , a \right) $$

ou selon la relation

$$ d = \frac{\ln(N1) - \ln(N3)}{\ln(N2) - \ln(N1)} \cdot a $$

N1 désignant la première valeur mesurée numérique, N2 la deuxième valeur mesurée numérique, N3 une valeur numérique de référence et *a* la distance fixe.

**11.** Dispositif selon la revendication 10, **caractérisé par le fait que** la bobine de référence ( 5 ) est disposée en dehors de la zone d'influence de la surface ( 4 ) sur le capteur ( 1 ).

**12.** Dispositif selon la revendication 10, **caractérisé par le fait qu'**une mémoire ( 59 ) dans laquelle la valeur numérique de référence ( N3 ) est mémorisée est associée au composant de calcul.

**13.** Dispositif selon l'une des revendications 10 à 12, **caractérisé par le fait que**

- le dispositif oscillateur comporte deux oscillateurs ( 80, 81 ) délivrant des signaux de même fréquence et
- les oscillateurs ( 80, 81 ) sont reliés de telle sorte par l'intermédiaire d'un dispositif de commutation ( 60 ) aux bobines de mesure ( 45, 47 ) placées respectivement en aval que, respectivement, une seule bobine de mesure ( 45, 47 ) est reliée à son oscillateur ( 80, 81 ) placé en amont.

**14.** Dispositif selon l'une des revendications 10 à 13, **caractérisé par le fait que**

- le dispositif oscillateur comporte un seul oscillateur ( 40 ) et
- l'oscillateur ( 40 ) est relié de telle sorte en sortie par l'intermédiaire d'un commutateur ( 41 ) aux deux bobines de mesure ( 45, 47 ) que, à un instant donné, une seule bobine de mesure ( 45, 47 ) est raccordée à l'oscillateur ( 40 ).

**15.** Dispositif selon la revendication 11, **caractérisé par le fait qu'**un multiplexeur ( 28 ) qui est commandé en cadence par le composant de calcul ( 31 ) est monté entre le capteur ( 27 ) et le dispositif démodulateur ( 29 ).

**16.** Dispositif selon l'une des revendications 10 à 15, **caractérisé par le fait que**

    - le dispositif oscillateur ( 40 ) délivre comme signaux de même fréquence des tensions sinusoïdales et respectivement deux tensions rectangulaires ( Ur1, Ur2, Ur3, Ur4 ) déphasées de 90° l'une par rapport à l'autre et
    - les tensions rectangulaires ( Ur1, Ur2, Ur3, Ur4 ) se trouvent à des entrées de commande de deux modulateurs ( 49, 50 ) qui sont placés respectivement en aval d'une bobine ( 45, 47 ) et qui forment le dispositif démodulateur ( 51 ).

**17.** Dispositif selon la revendication 13 ou 16, **caractérisé par le fait que**

    - le dispositif de commutation ( 60 ) contient deux commutateurs ( 61, 62 ) travaillant de manière synchrone et
    - dans une certaine position de commutation du dispositif de commutation ( 60 ), la première bobine de mesure ( 45 ) est raccordée à l'oscillateur ( 40 ) par l'intermédiaire du commutateur ( 61 ) et simultanément la deuxième bobine ( 47 ) est raccordée à une source de tension de référence ( Ref ) par l'intermédiaire de l'autre commutateur ( 62 ) et, dans l'autre position de commutation du dispositif de commutation ( 60 ), la première bobine de mesure ( 45 ) est reliée à la source de tension de référence ( Ref ) et simultanément la deuxième bobine de mesure ( 47 ) est reliée à l'oscillateur ( 40 ).

**18.** Dispositif selon la revendication 16 ou 17, **caractérisé par le fait que**

    - un premier additionneur ( 70 ) est monté entre la première bobine de mesure ( 45 ) et le démodulateur ( 49 ) agencé en aval de celle-ci et un deuxième additionneur ( 71 ) est agencé entre la deuxième bobine de mesure ( 47 ) et le démodulateur ( 50 ) agencé en aval de celle-ci et
    - un déphaseur ( 72 ) agencé en aval de la première bobine de mesure ( 45 ) est relié au deuxième additionneur ( 71 ) et un déphaseur ( 73 ) monté en aval de la deuxième bobine de mesure ( 47 ) est relié au premier additionneur ( 70 ).

FIG 1

FIG 2

FIG 3

FIG 4

FIG 5

# FIG 6

FIG 7

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19525131 C2
- DE 19525131 A
- DE 0264461 A
- DE 2503560
- DE 10332761 A